# EUROPEAN PATENT SPECIFICATION

(11) **EP 2 999 755 B1**
(45) Date of publication and mention of the grant of the patent: **02.08.2017**
(21) Application number: 13725146.8
(22) Date of filing: 23.05.2013
(51) Int. Cl.: C09D 5/18, C08K 3/00, C08K 5/00, C09K 21/00, C09D 7/12

(54) **FIRE PROTECTING COATINGS**
BRANDSCHUTZBESCHICHTUNGEN
REVÊTEMENTS DE PROTECTION CONTRE L'INCENDIE

(43) Date of publication of application: 30.03.2016
(73) Proprietor: Convention Européenne de La Construction Métallique (CECM), 1200 Brussels (BE); Asociacion de la Industria Navarra (AIN), 31191 Cordovilla (Navarra ) (ES); Slovenski Gradbeni Grozd-giz, 1000 Ljubljana (SI)
(72) Inventor: DEL CASTILLO BONET, Carlos, E-28028 Madrid (ES); MUÑOZ CARRASCO, Javier, E-28050 Madrid (ES); FERNÁNDEZ REYES, Raquel, E-28041 Madrid (ES); SACRISTÁN BERMEJO, Javier, E-28016 Madrid (ES); CUSACK, Paul, Iver Heath Buckinghamshire SL0 0HG (GB); TRIPP, David, Crawley (West Sussex) Sussex RH10 3UT (GB); SHAW, Stephen, Ware Hertfordshire SG12 8HD (GB)
(74) Representative: Pons
(86) International application number: PCT/EP2013/060663
(87) International publication number: WO 2014/187496

(56) References cited:
- EP-A1- 1 178 150
- EP-A1- 1 466 946
- WO-A1-02/096996
- US-A1- 2011 251 310

## Description

The present invention relates to intumescent compositions with enhanced fire, chemical and mechanical properties and their procedure of obtainment. Furthermore, the invention refers to the use of the compositions as fire protecting intumescent, particularly as fire protecting intumescent coating of articles such as steel structural components, composites and wood. Moreover, the invention relates to articles containing the intumescent composition.

### BACKGROUND ART

Fire protecting intumescent coatings are used in order to protect different elements made of steel, wood, paper, polymers and other material affected by heat affects. Intumescent compositions can be compounded inside polymer matrixes or applied as a protective coating, for example as a paint or a coating.

The intumescent compositions currently available on the market show low fire, mechanical and chemical resistance and they cannot be considered as a robust and reliable technology. For example, to achieve the requirements dictated by the stringent European Normative Steel Fire Resistance defined values, several layers of state-of-art intumescent coatings are needed to be applied, at least 3 or 4, increasing costs for steelwork structures. Minimum drying times of intumescent coatings in moderate weather conditions of 24-36 hours, which combined with the need of 3-4 layers yields a minimum effective time of application of 3-4 days, resulting in a very high cost associated to labor, site disruption and space required for painting.

On the other hand, the poor water resistance and the long drying times of current available intumescent coatings make difficult the off-site use of these coatings, mostly applied on-site, as exposure to rain can reduce their final efficiency. So, the coatings are not weather resistant and are not suitable for exterior use and can be damage during construction.

Furthermore, the poor mechanical properties hinder the industrial application off-site. The final coatings are not hard enough to endure transport to construction area and the poor film forming properties of current intumescent coatings are not compatible with off-site assisted drying techniques.

Poor insulating behavior and low fire resistance are important drawbacks for current technologies; in fact, most of the intumescent coatings found in the literature are not structural steel protecting coatings but fire retardant coatings, with enhanced properties, only applicable for polymers.

There are significant differences between Fire retardancy and Fire Resistance. Fire retardancy involves the reduction of combustibility of some materials and some effects can be related to the emission of oxygen scavengers, for instance, the additivation of non combustible materials or the formation a hard protective carbon layer that protect versus combustion gasses that initiate combustion. However, fire resistance not only involves non combustibility but also the formation of a coherent alveolar layer around coated material that insulates versus heating effects. In order to yield good insulating properties, it is necessary to develop a continuous, closed, homogeneous, and cohesive light alveolar structure to reduce conductive and convective effects.

Recent research has been directed to the enhancement of mechanical and chemical properties, namely the inclusion of micro and nano additives in intumescent coatings in order to increase char cohesion and chemical resistance; however no significant performance increase is achieved.
Tin compounds are mainly used as fire retardants in PVC and other halogen-containing polymers.
(EP896649, GB2230255). However, to obtain fire retardant and smoke suppressant properties, it is often necessary to include relatively high levels of tin compounds (up to 10%)something that increases product costs and interferes with formation of the insulative intumescent layer providing fire resistance.
US7045080 describes an enhanced fire retardant coating containing high particle sizes of intumescent ceramic particles. WO9800461 discloses an intumescent composition that includes refractory fibers and different fillers for char enhancement, self-extinguishing properties and fire retardancy. Moreover, different refractory fibers from different diameters and lengths are considered to improve the resistance to high temperatures (CA2049031). WO02096996 discloses an intumescent coating composition in a solid state comprising from 20% to 80% by volume of a polymer resin system together with from 15% to 75% by volume of intumescent ingredients. Mechanical enhancers are known to reduce the thickness of the insulative layer and to increase the alveolar structure density so they can be useful for improving fire retardancy properties and enhance char stability, but not for Fire Resistance proposes which insulating properties are reduced by the of mechanical enhancers.

Highest performance intumescent coatings rely on the use of halogen agents mainly chloroparafines in order to increase the Fire Resistance performance of intumescents. However halogens emissions are highly toxic and asphyxiating.

Furthermore, classical intumescent coatings are based on the insulating properties of intumescent layers. These materials exhibit poor insulating properties versus radiated heat effects.

For the reasons stated above, it is needed to develop halogen free intumescent coatings that could incorporate reflective layers as a new insulating mechanism for radiated energy.

### DESCRIPTION OF THE INVENTION

The present invention provides halogen free intumescent compositions with enhanced fire, chemical and mechanical properties. It also relates to halogen free intumescent compositions which comprises reflecting additives.

Therefore, a first aspect of the present invention relates to a halogen-free composition that comprises the following components
- a tin compound ranging a percentage between 0.1 and 1% by weight with a particle size of less than 5 micrometer,
- a polymeric binder ranging a percentage between 5 to 50% by weight,
- an intumescent composition ranging a percentage between 20 and 60% by weight,
- TiO₂ ranging a percentage between 4 and 7% by weight,
- alumina trihydrate ranging a percentage between 2.5 and 5% by weight.

The term "polymeric binder" as used herein refers to polymeric matrixes in which the intumescent compositions are formulated.

In a preferred embodiment, the tin compound has a percentage by weight between 0.2 and 0.5 %.

Tin compounds enhance the intumescent behaviour of the intumescent coating as they stabilize the foam at the early formation stages and significantly reduce smoke emissions.

Surprisingly it has been found that the use of low amount of low particle size tin compounds in reduced content lower than 1% weight in intumescent systems enhances the performance of intumescent coatings, especially when these compounds are formulated in the form nano coated ATH particles.

In another preferred embodiment, the polymeric binder has a percentage by weight between 5 and 32 %.

Tin compounds can be combined, resulting in a synergistic effect, with other enhancers leading to the improvement of mechanical resistance, impact resistance hardness, scratch resistance, chemical resistance, reduced intumescent temperature and low toxic gasses emission.. Furthermore the increase of the binder content leads to a better temperature profiles allowing the application of assisted drying systems without cracking. The thickness of the fire resistance protection is reduced and consequently drying times are reduced maintaining a significantly increase of coating efficiency.

In another preferred embodiment, the intumescent composition has a percentage by weight between 30 and 50 %.

In another preferred embodiment, the alumina trihydrate has a percentage by weight between 2.5 and 4 %.

In a preferred embodiment, the tin compound is selected from the list comprising zinc stannate, zinc hydroxy stannate and tin oxide.

In another preferred embodiment, the particle size of the tin compound is ranging values between 10 and 500 nanometers.

In another preferred embodiment, the tin compound is added as a tin compound coated aluminium trihydroxide.

In another preferred embodiment, the polymeric binder is a resin. In a more preferred embodiment, the resin is in the form of solid resins, liquid resins, water soluble resins, water dispersible resins, and emulsions.

In another preferred embodiment, the resin is selected from list consisting of polyvinyl acetates, acrylics, rubbers, polyurethanes, alkyds, silicones, urea-formaldehydes, epoxies, polyesters, nitrocellulose and mixtures vinyl esters, styrene acryl resin, styrene polyvinyl butadiene hybrids and blends thereof.

For example, but not limiting, a vinyl ester is VEOVA^{™}.

In another preferred embodiment, the resin is a thermoplastic or a thermoset.

A further embodiment of the present invention provides an intumescent composition comprising an acid source, a hydroxyl source and a foaming agent.

In the present invention, the "acid sources" react with hydroxyl sources to form thermally stable structures that form the isolative carbonaceous layer of the final intumescent article.

In a preferred embodiment, the acid source of the intumescent composition is selected from the list consisting of phosphoric salts, phosphoric acids, sulphuric salts, sulphuric acids, boric salts, boric acids and a combination thereof.

In a more preferred embodiment, the acid source of the intumescent composition is selected from the list consisting of ammonium sulfates, ammonium borates, ammonium phosphates, amine phosphates, amide phosphates, organo-phosphoric amines, sulphate salts of nitro substituted aromatic amines, organo phosphorous compounds and a combination thereof.

In the present invention, the "hydroxyl sources" are highly hydroxyl functional compounds that react with acid sources during intumescence.

In another preferred embodiment, the hydroxil source of the intumescent composition is selected from the list consisting of pentaeritrhytol, dipentaerythritol, glucose, arabinose, maltose, erythritol, arabitol, inositol, starch, dextrin, sorbitol, resorcinol, phenolics, pentaerythritol polyurethanes, glycerol, methylol melamine, isano oil, linseed oil and a combination thereof. In the present invention, the "foaming or blowing agents" are compounds that decompose during the melt and reaction of acid and hydroxyl sources, creating the insulating foam.

In another preferred embodiment, the foaming agent of the intumescent composition is selected from the list consisting melamine, guanidine, glycine, urea, azodicarbonamide, benzene sulfonil hydrazine, azobisbutyronitrilo-p-toluene-sulfonil semicarbazide, waxes, bicarbonates and a combination thereof.

A further embodiment of the present invention relates to the composition which further comprises at least an additive.

In a preferred embodiment, the additive is selected from the list consisting of coalescents, plastizicers, dispersants, wetting agents, surfactants, defoamers or rheological additives.

A further embodiment of the present invention relates to a composition which further comprises a mechanical enhancer additive ranging a percentage by weight between 0.3 and 5 %.

In the present invention, the term "mechanical enhancer additive" relates to additives improving the mechanical properties of the polymers wherein it is blended in.

Tin compounds allow the increase of additives such as mechanical enhancers, leading to an improvement of mechanical and chemical properties.

In a preferred embodiment, the mechanical enhancer additive is glass beads in particles with a diameter size of less than 70 micrometers.

In another preferred embodiment, the mechanical enhancer additive is silica or alumina in a particle size of less than 0.5 micrometers.

A further embodiment of the present invention relates to a composition which further comprises low expansion temperature expandable graphite in a weight percentage of less than 10%. Furthermore, this low expansion temperature expandable graphite has a particle size of at least 50 micrometers.

The expression "low expansion temperature" is defined here as lower than 380°C. Consequently, the term "low expansion temperature expandable graphite" refers to expandable graphite based on expansion temperatures lower than 380°C, preferably it is expandable graphite based on temperatures lower than 300°C which provides an initial expansion stage of the final intumescent layer.

The addition of low expansion temperature expandable graphite enhance the insulation properties during the first stages of fire development on one hand and furthermore reduces toxic gasses emission.

In a preferred embodiment, the low expansion temperature expandable graphite is in a weight percentage of less than 4 %.

A further embodiment of the present invention relates to the composition, which further comprises reflecting additives ranging a percentage between 1 and 10% by weight.

"Reflective additives" are defined in the present invention as compounds which optical behavior provides radiated heat reflection such inorganic reflective pigments coated flakes or metallic coated particles, for instant of aluminium or of aluminium compounds.

Reflecting additives provides insulation versus heat radiation during the first stages of fire development and enhance the insulating behaviour of the foam as foams are good convective and conductive insulators but poor radiation insulators.

In a preferred embodiment, the reflecting additives are ranging a weight percent between 1 and 5 % by weight.

In another preferred embodiment, the reflecting additives are particles with a diameter size of less than 70 micrometers.

In another preferred embodiment, the reflecting additives are pigments.

In another preferred embodiment, the reflecting particles are aluminium or aluminium compounds.

Furthermore, the present invention relates to a process for obtaining the halogen free intumescent compositions mentioned above, so that the second aspect of the present invention relates to a process for obtaining the above mentioned composition, which is carried out by means of uniform dispersion techniques of polymer matrixes at temperatures below 350 °C and which comprises following steps:
a) heating the solid polymer binder in the presence of an additive selected from plasticizers, compatibilizers and a combination thereof,
b) adding TiO₂ and optionally at least one mechanical enhancer additive to the mixture of step (a),
c) adding alumina trihydrate, a tin compound and optionally at least one mechanical enhancer additive and at least one reflecting additive to the mixture of step (b),
d) adding an intumescent composition to the mixture of step (c),
e) optionally adding low expansion temperature expandable graphite, at least one mechanical enhancer additive, at least one reflecting additive or any combination thereof to the mixture of step (d).

In a preferred embodiment, the process is performed at temperature values between 50 and 350°C.

In a more preferred embodiment, the process is carried out at temperature values between 50 and 300°C.

In another preferred embodiment, the uniform dispersion techniques are selected from the list consisting of extrusion, compounding, blending, sonification and centrifugation.

Moreover, the present invention relates to another process for obtaining the halogen free intumescent compositions mentioned above. Thus, the third aspect of the present invention relates to a process for obtaining halogen free intumescent compositions mentioned above, which is carried out by means of uniform dispersion techniques at velocities below 30 ms⁻¹ and which comprises following steps:
a) preparing a premixture comprising solvents, cosolvents, coalescents, plastizicers, dispersants, wetting agents, surfactants and defoamers, said premixture having a pH ranging values between 7.5 and 8.5,
b) adding TiO₂ and optionally at least one mechanical enhancer additive and optionally at least one rheological additive to the premixture of step (a),
c) adding alumina trihydrate, a tin compound and optionally at least one mechanical enhancer additive and at least one reflecting additive to the mixture of step (b),
d) adding an intumescent composition to the mixture of step (c),
e) optionally adding low expansion temperature expandable graphite, at least one mechanical enhancer additive, at least one reflecting additive or any combination thereof to the mixture of step (d), and
f) adding a liquid polymeric binder to the mixture of step (e).

Water can be used as solvent for obtaining halogen free intumescent compositions mentioned above. Therefore, in a preferred embodiment, the process is performed at a temperature below 100°C, concretely at a temperature bellow boiling of water.

In another preferred embodiment the process is carried out by means of uniform dispersion techniques selected from the list consisting of milling, dispersion, agitation, dissolution, emulsion, sonification and centrifugation.

A fourth aspect of the present invention relates to the use of the above mentioned composition as fire protecting intumescent.

In a preferred embodiment, the use is as fire protecting intumescent coating of articles.

In a more preferred embodiment, the articles are steel structural components, composites, wood or reinforced plastics.

Moreover, the present invention relates to articles containing the halogen free composition mentioned above.

A fifth aspect of the present invention relates to an article coated by the above mentioned composition.

A sixth aspect of the present invention relates to the process for obtaining the article coated by the mentioned composition which comprises a step of coating the article by spraying.

A seventh aspect of the present invention relates to an article wherein the above mentioned halogen free composition is embedded.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### BRIEF DESCRIPTION OF THE DRAWINGS

Fig. 1. Temperature profiles of compositions 2, 4 and standard.
Fig. 2. Temperature profiles of compositions 5 and standard.

### EXAMPLES

### Example 1:

Different halogen-free water borne compositions were prepared by constant mixing using a Cowles disperser. The ingredients of the compositions are shown in Tables 1-5.

For obtaining these composition a premixture consisting of water, coalescent, flexibiliser and other additives (rheological additives, dispersants, emulsionants, etc) was prepared stirring at medium speed during 20 minutes obtaining an homogeneous dispersion. After that pH of the premixture is adjusted to a pH close to 8.

Under high shear force TiO₂, the tin compound coated ATH (aluminium trihydroxide) and rheological additives were added using dispersion cowles disc or other high shear mixer maintaining peripherical speeds between 15-25 ms⁻¹ for times not less than 5 min for each component. Mechanical enhancer [See Table 2 and 3] and reflecting additives [Table 5] were also added maintaining peripherical speeds between 15-25 ms⁻¹ for at least 5 min for each componen.

Then APP-II, Melamine and Pentaerythritol were added sequentially and by continuously stirring leaving 2-5 minutes before the addition of next one ingredient. The mixture was stired for a total time no more than 10 minutes at medium shear speed (10-20 ms⁻¹).

After this, reflecting additives [Table 5] and low expansion temperature expandable graphite [Tables 2-4] were added under low shear force with mechanical stirring for unless 10 minutes with peripherical speeds not higher than 10 ms⁻¹.

Finally, polyvinyl acetate was added by continuously stirring.

**Table 1 shows an halogen-free composition that comprises a tin compound, a liquid polymeric binder, an intumescent composition, TiO₂ and ZHS coated alumina trihydrate.**

| **Table 1- Composition 1** | | |
|---|---|---|
| Additive | Grams | % |
| Water | 19.0 | 19.0 |
| TiO₂ | 6.0 | 6.0 |
| APP-II (Ammonium Polyphosphate) | 28.0 | 28.0 |
| Pentaerythritol | 8.0 | 8.0 |
| ZHS (Zinc hydroxy stannate) coated ATH (Aluminium trihydroxide) | 3.0 | 3.0 |
| Melamine | 8.5 | 8.5 |
| Flexibiliser | 4.7 | 4.7 |
| PVA (Polyvinyl acetate) | 16.0 | 16.0 |
| Coalescent | 4.0 | 4.0 |
| Other additives (rheological additives, dispersants, emulsionants, etc) | 2.8 | 2.8 |
| Totals | 100.0 | 100.0 |

**Table 2 shows an halogen-free composition that comprises a tin compound, a liquid polymeric binder, an intumescent composition, TiO₂, ZHS coated alumina trihydrate, low expansion temperature expandable graphite and silica in a particle size of less than 0.5 micrometers as mechanical enhancer.**

| **Table 2 - Composition 2** | | |
|---|---|---|
| Additive | grams | % |
| Water | 19.0 | 19.0 |
| TiO₂ | 5.0 | 5.0 |
| Nano Silica 20 nm | 1.0 | 1.0 |
| expandable graphite EG | 0.0 | 0.0 |
| APP-II | 28.0 | 28.0 |
| Pentaerythritol | 8.0 | 8.0 |
| ZHS coated ATH | 3.0 | 3.0 |
| Melamine | 8.5 | 8.5 |
| Flexibiliser | 4.7 | 4.7 |
| PVA | 16.0 | 16.0 |
| Coalescent | 4.0 | 4.0 |
| Other additives | 2.8 | 2.8 |
| Totals | 100.0 | 100.0 |

**Table 3 shows an halogen-free composition that comprises a tin compound, a liquid polymeric binder, an intumescent composition, TiO₂, ZHS coated alumina trihydrate, low expansion temperature expandable graphite and glass beads as mechanical enhancer.**

| **Table 3 - Composition 3** | | |
|---|---|---|
| Additive | grams | % |
| Water | 19.0 | 19.0 |
| TiO₂ | 5.0 | 5.0 |
| Glass Beads 30 microns | 1.0 | 1.0 |
| expandable graphite EG | 0.0 | 0.0 |
| APP-II | 28.0 | 28.0 |
| Pentaerythritol | 8.0 | 8.0 |
| ZHS coated ATH | 3.0 | 3.0 |
| Melamine | 8.5 | 8.5 |
| Flexibiliser | 4.7 | 4.7 |
| PVA | 16.0 | 16.0 |
| Coalescent | 4.0 | 4.0 |
| Other additives | 2.8 | 2.8 |
| Totals | 100.0 | 100.0 |

**Table 4 shows an halogen-free composition that comprises a tin compound, a liquid polymeric binder, an intumescent composition, TiO₂, ZHS coated alumina trihydrate, low expansion temperature expandable graphite EG and glass beads as mechanical enhancer.**

| **Table 4 - Composition 4** | | |
|---|---|---|
| Additive | grams | % |
| Water | 19.0 | 19.0 |
| TiO₂ | 5.0 | 5.0 |
| Glass Beads 30 microns | 1.0 | 1.0 |
| Expandable graphite EG 160 microns | 7.6 | 7.6 |
| APP-II | 26.7 | 26.7 |
| Pentaerythritol | 8.1 | 8.1 |
| ZHS coated ATH | 3.0 | 3.0 |
| Melamine | 2.0 | 2.0 |
| Flexibiliser | 4.7 | 4.7 |
| PVA | 16.0 | 16.0 |
| Coalescent | 4.0 | 4.0 |
| Other additives | 2.8 | 2.8 |
| Total | 100.0 | 100.0 |

**Table 5 shows an halogen-free composition that comprises a tin compound, a liquid polymeric binder, an intumescent composition, TiO₂, ZHS coated alumina trihydrate, glass beads as mechanical enhancer and a pigment as reflecting additive.**

| **Table 5 - Composition 5** | | |
|---|---|---|
| Additive | grams | % |
| Water | 19.00 | 19.00 |
| TiO₂ | 5.00 | 5.00 |
| Glass Beads 30 microns | 1.00 | 1.00 |
| Reflective Pigment | 6.97 | 6.97 |
| APP-II | 22.97 | 22.97 |
| Pentaerythritol | 6.56 | 6.56 |
| ZHS coated ATH | 3.00 | 3.00 |
| Melamine | 8.00 | 8.00 |
| Flexibiliser | 4.70 | 4.70 |
| PVA | 16.00 | 16.00 |
| Coalescent | 4.00 | 4.00 |
| Other additives | 2.80 | 2.80 |
| Totals | 100 | 100.00 |

The different compositions exhibit different mechanical, fire and smoke suppression behaviours, as shown in Table 6. These properties have been evaluated as reference to standard compositions. Standard compositions do not include tin compounds, mechanical enhancer additives, reflective additives, low activation temperature expandable graphite or any combination thereof.

| **Standard Composition** | | |
|---|---|---|
| Additive | Grams | % |
| Water | 19.0 | 19.0 |
| TiO₂ | 6.0 | 6.0 |
| APP-II | 28.0 | 28.0 |
| Pentaerythritol | 8.0 | 8.0 |
| ATH | 3.0 | 3.0 |
| Melamine | 8.5 | 8.5 |
| Flexibiliser | 4.7 | 4.7 |
| PVA | 16.0 | 16.0 |
| Coalescent | 4.0 | 4.0 |
| Other additives | 2.8 | 2.8 |
| Totals | 100.0 | 100.0 |

**Table 6. Mechanical Ratio, Fire performance and Smoke reduction properties of a standard composition and compositions 1-5.**

| Composition | Mechanical Ratio | Fire Performance | Smoke Reduction (%) |
|---|---|---|---|
| 1 | 1 | 2.1 | 62.38 |
| 2 | 1.53 | 1.93 | 59.06 |
| 3 | 1.32 | 2.3 | 65.65 |
| 4 | 1.35 | 2.4 | 86.06 |
| 5 | 1.32 | 2.09 | 75.78 |
| Standard | 1 | 1 | 0% |

The compositions of the invention increases the fire performance up to a 2 times compared to standard formulations.

The use of nanosilica particles increases mechanical performance although, fire performance is reduced.

Glass beads reinforce both behaviours but the increase of the mechanical resistance performance is not as extraordinary as this of the nanosilica particles.

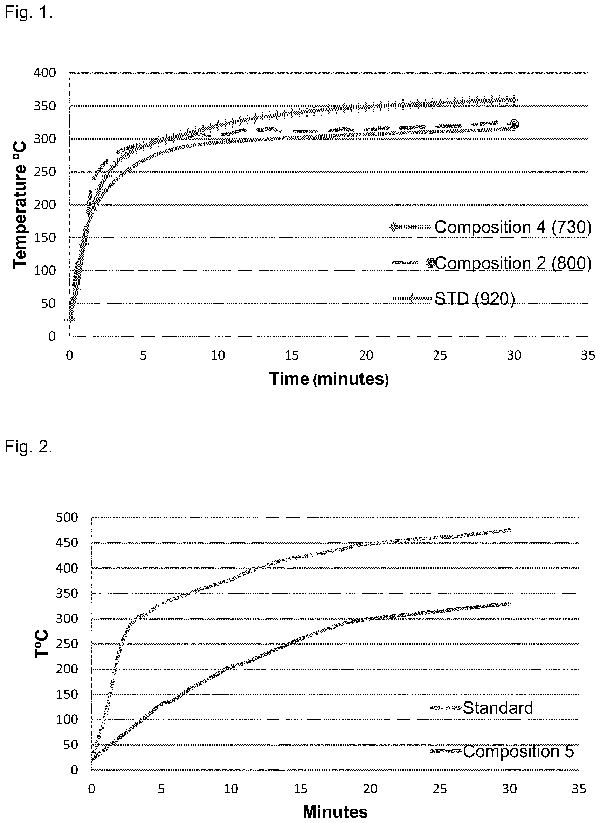

Fig 1 shows the temperature profile of composition 4 manufactured at low stirring speeds. This composition exhibit different temperature profiles in respect to their corresponding standards, and a slight fire performance increase compared to composition 2. As observed in Fig. 1, the temperature of protected articles with composition 4 remains under non Expandable Graphite containing compositions during the first stages of fire developments due to the lower activation temperature of the expandable graphite additive.

Furthermore, composition 4 exhibit better insulation properties during the first stages of fire developments (longer fire resistance values during longer times), and better smoke suppressant properties.

Fig. 2 shows the enhancement of the insulating properties due to the incorporation of reflective additives (composition 5). The insulating effect is observed in the first stages of the fire development, opposite to composition 1-4 which effect needs to be activated at a threshold temperature value.

### Example 2

Different halogen-free compositions were prepared in an Brabender blender working. The ingredients of the compositions are shown in Tables 7 and 8.

For obtaining composition 7, described in Table 7, Polypropylene PP resin and Ethylene vinyl acetate EVA resin were added in the blender and heated at 200°C. In order to prepared composition 8, the heating of Polyethylene PE resin and Ethylene vinyl acetate EVA resin was performed at 130°C. After the heating the other ingredientes were added under continuous stiring for at least 5 min for each component..

**Table 7 shows an halogen-free composition that comprises a tin compound, a solid polymeric binder, an intumescent composition, TiO₂, alumina trihydrate and glass beads as mechanical enhancer.**

| **Table 7 - Composition 7** | |
|---|---|
| Additive | % wt |
| Polypropylene PP resin | 50 |
| Ethylene vinyl acetate EVA resin | 5 |
| TiO2 | 5 |
| ZHS coated ATH | 5 |
| Glass Beads 30 microns | 3 |
| APP | 20.1 |
| Pentaerythritol | 6.1 |
| Melamine | 5.8 |
| Totals | 100.00 |

**Table 8 shows an halogen-free composition that comprises a tin compound, a solid polymeric binder, an intumescent composition, TiO₂, alumina trihydrate and glass beads as mechanical enhancer.**

| **Table 8 - Composition 8** | |
|---|---|
| Additive | % wt |
| Polyethylene PE resin | 50 |
| EVA resin | 5 |
| TiO2 | 5 |
| ZHS coated ATH | 5 |
| Glass Beads 30 microns | 3 |
| APP | 18.9 |
| Pentaerythritol | 5.7 |
| Melamine | 5.4 |
| EG | 2% |
| Totals | 100.00 |

## Claims

1. A halogen-free composition that comprises the following components:
• a tin compound ranging a percentage between 0.1 and 1% by weight with a particle size of less than 5 micrometer,
• a polymeric binder ranging a percentage between 5 and 50% by weight,
• an intumescent composition ranging a percentage between 20 and 60% by weight,
• TiO₂ ranging a percentage between 4 and 7% by weight, and
• alumina trihydrate ranging a percentage between 2 and 5% by weight.

2. The composition, according to claim 1, wherein the tin compound has a percentage by weight between 0.2 and 0.5 %.

3. The composition, according to any one of claims 1 or 2, wherein the polymeric binder has a percentage by weight between 5 and 32 %.

4. The composition, according to any one of claims 1 to 3, wherein the intumescent composition has a percentage by weight between 30 and 50 %.

5. The composition, according to any one of claims 1 to 4, wherein the alumina trihydrate has a percentage by weight between 2.5 and 4 %.

6. The composition, according to any one of claims 1 to 5, wherein the tin compound is selected from the list consisting of zinc stannate, zinc hydroxy stannate and tin oxide.

7. The composition, according to any one of claims 1 to 6, wherein the particle size of the tin compound is ranging values between 10 and 500 nanometers.

8. The composition, according to any one of claims 1 to 7, wherein the tin compound is added as a tin compound coated aluminium trihydroxide.

9. The composition, according to any one of claims 1 to 8, wherein the polymeric binder is a resin.

10. The composition, according to claim 9, wherein the resin is in the form of solid resins, liquid resins, water soluble resins, water dispersible resins or emulsions.

11. The composition, according to claim 9 or 10, wherein the resin is selected from list consisting of polyvinyl acetates, acrylics, rubbers, polyurethanes, alkyds, silicones, urea-formaldehides, epoxies, polyesters, nitrocellulose, vinyl esters, styrene acryl resin, styrene polyvinyl butadiene and mixtures, hybrids and blends thereof.

12. The composition, according to claim 9, wherein the resin is a thermoplastic or a thermoset.

13. The composition, according to any of claims 1 to 12, wherein the intumescent composition comprises an acid source, a hydroxyl source and a foaming agent.

14. The composition, according to claim 13, wherein the acid source of the intumescent composition is selected from the list consisting of phosphoric salts, phosphoric acids, sulphuric salts, sulphuric acids, boric salts, boric acids and a combination thereof.

15. The composition, according to claim 14, wherein the acid source of the intumescent composition is selected from the list consisting of ammonium sulfates, ammonium borates, ammonium phosphates, amine phosphates, amide phosphates, organo-phosphoric amines, sulphate salts of nitro substituted aromatic amines, organophosphorous compounds and a combination thereof.

16. The composition, according to any one of claims 13 to 15, wherein the hydroxil source of the intumescent composition is selected from the list consisting of pentaeritrhytol, dipentaerythritol, glucose, arabinose, maltose, erythritol, arabitol, inositol, starch, dextrin, sorbitol, resorcinol, phenolics, pentaerythritol polyurethanes,glycerol, methylol melamine, isano oil, linseed oil and a combination thereof.

17. The composition, according to any one of claims 13 to 16, wherein the foaming agent of the intumescent composition is selected from the list consisting of melamine, guanidine, glycine, urea, azodicarbonamide, benzene sulfonil hydrazine, azobisbutyronitrilo-p-toluene-sulfonil semicarbazide, waxes, bicarbonates and a combination thereof.

18. The composition, according to any one of claims 1 to 17, which further comprises at least an additive.

19. The composition, according to claim 18, wherein the additive is selected from the list consisting of coalescents, plastizicers, dispersants, wetting agents, surfactants, defoamers or rheological additives.

20. The composition, according to any one of claims 1 to 19, which further comprises a mechanical enhancer additive ranging a percentage by weight between 0.3 and 5 %.

21. The composition, according to claim 20, wherein the mechanical enhancer additive is glass beads in particles with a diameter size of less than 70 micrometers.

22. The composition, according to claim 20, wherein the mechanical enhancer additive is silica or alumina in a particle size of less than 0.5 micrometers.

23. The composition, according to any one of claims 1 to 22, which further comprises low expansion temperature expandable graphite with a particle size of at least 50 micrometers in a weight percentage of less than 10%.

24. The composition, according to claim 23, wherein the low expansion temperature expandable graphite is in a weight percentage of less than 4%.

25. The composition, according to any one of claims 1 to 24, which further comprises reflecting additives ranging a percentage between 1 and 10% by weight.

26. The composition, according to claim 25, wherein the reflecting additives are ranging a weight percentage between 1 and 5% by weight.

27. The composition according to any of claims 25 or 26, wherein the reflecting additives are particles with a diameter size of less than 70 micrometers.

28. The composition according to any one of claims 25 to 27, wherein the reflecting additives are pigments.

29. The composition, according to any one of claims 25 to 27, wherein the reflecting particles are aluminium or aluminium compounds.

30. A process for obtaining the composition, according to claims 1 to 29, which is carried out by means of uniform dispersion techniques of polymer matrixes at temperatures below 350 °C and which comprises following steps:
a) heating the solid polymer binder in the presence of an additive selected from plasticizers, compatibilizers and a combination thereof,
b) adding TiO₂ and optionally at least one mechanical enhancer additive to the mixture of step (a),
c) adding alumina trihydrate, a tin compound and optionally at least one mechanical enhancer additive and at least one reflecting additive to the mixture of step (b),
d) adding an intumescent composition to the mixture of step (c),
e) optionally adding low expansion temperature expandable graphite, at least one mechanical enhancer additive, at least one reflecting additive or any combination thereof to the mixture of step (d).

31. The process, according to claim 30, which is performed at temperature values between 50 and 350°C.

32. The process, according to claim 31, which is performed at temperature values between 50 and 300°C.

33. The process, according to any one of claims 30 to 32, wherein the uniform blending techniques are selected from the list consisting of extrusion, compounding, blending, sonification and centrifugation.

34. A process for obtaining the composition, according to claims 1 to 29, which is carried out by means of uniform dispersion techniques at velocities below 30 ms⁻¹ and which comprises following steps:
a) preparing a premixture comprising solvents, cosolvents, coalescents, plastizicers, dispersants, wetting agents, surfactants, flexibilizers and defoamers, said premixture having a pH ranging values between 7.5 and 8.5,
b) adding TiO₂ and optionally at least one mechanical enhancer additive and optionally at least one rheological additive to the premixture of step (a),
c) adding alumina trihydrate, a tin compound and optionally at least one mechanical enhancer additive and at least one reflecting additive to the mixture of step (b),
d) adding an intumescent composition to the mixture of step (c),
e) optionally adding low expansion temperature expandable graphite, at least one mechanical enhancer additive, at least one reflecting additive or any combination thereof to the mixture of step (d), and
f) adding a liquid polymeric binder to the mixture of step (e).

35. The process, according to claim 34, wherein the uniform dispersion techniques are selected from the list consisting of milling, agitation, dissolution, emulsion, sonification and centrifugation.

36. Use of the halogen-free composition according to any one of claims 1 to 29 as fire protecting intumescent.

37. Use according to claim 36 as fire protecting intumescent coating of articles.

38. Use according to claim 37, wherein the articles are steel structural components, composites, wood or reinforced plastics.

39. Article coated by the halogen-free composition described according to any of claims 1 to 29.

40. A process for obtaining the coated article according to claim 39, which comprises a step of coating the article by spraying.

41. Article having embedded the halogen-free composition described according to any of claims 1 to 29.

## Patentansprüche

1. Halogenfreie Zusammensetzung, die folgende Komponenten umfasst:
- eine Zinnverbindung mit einem Prozentsatz von 0,1 bis 1 Gew.-% und einer Partikelgröße kleiner als 5 Mikrometer,
- ein polymeres Bindemittel mit einem Prozentsatz von 5 bis 50 Gew.-%,
- eine Intumeszenzzusammensetzung mit einem Prozentsatz von 20 bis 60 Gew.-%,
- TiO₂ mit einem Prozentsatz von 4 bis 7 Gew.-% und
- Aluminiumoxid-Trihydrat mit einem Prozentsatz von 2 bis 5 Gew.-%.

2. Zusammensetzung nach Anspruch 1, wobei die Zinnverbindung mit einem Gewichtsprozentsatz von 0,2 bis 0,5 % vorliegt.

3. Zusammensetzung nach einem der Ansprüche 1 oder 2, wobei das polymere Bindemittel mit einem Gewichtsprozentsatz von 5 bis 32 % vorliegt.

4. Zusammensetzung nach einem der Ansprüche 1 bis 3, wobei die Intumeszenzzusammensetzung mit einem Gewichtsprozentsatz von 30 bis 50 % vorliegt.

5. Zusammensetzung nach einem der Ansprüche 1 bis 4, wobei das Aluminiumoxid-Trihydrat mit einem Gewichtsprozentsatz von 2,5 bis 4 % vorliegt.

6. Zusammensetzung nach einem der Ansprüche 1 bis 5, wobei die Zinnverbindung ausgewählt wird aus der Liste bestehend aus Zinkstannat, Zinkhydroxystannat und Zinnoxid.

7. Zusammensetzung nach einem der Ansprüche 1 bis 6, wobei die Partikelgröße der Zinnverbindung Werte im Bereich von 10 bis 500 Nanometer annimmt.

8. Zusammensetzung nach einem der Ansprüche 1 bis 7, wobei die Zinnverbindung in Form einer mit Aluminiumtrihydroxid beschichteten Zinnverbindung hinzugefügt wird.

9. Zusammensetzung nach einem der Ansprüche 1 bis 8, wobei das polymere Bindemittel ein Harz ist.

10. Zusammensetzung nach einem der Ansprüche 1 bis 9, wobei das Harz in Form von Festharzen, Flüssigharzen, wasserlöslichen Harzen, wasserdispergierbaren Harzen oder Emulsionen vorliegt.

11. Zusammensetzung nach einem der Ansprüche 9 oder 10, wobei das Harz ausgewählt wird aus der Liste bestehend aus Polyvinylacetaten, Acrylharzen, Gummis, Polyurethanen, Alkyden, Silikonen, Harnstoff-Formaldehyden, Epoxyden, Polyestern, Nitrocellulose, Vinylestern, Styrolacrylharz, Styrol-Polyvinyl-Butadien und Mischungen, Hybriden und Blends davon.

12. Zusammensetzung nach Anspruch 9, wobei das Harz ein Thermoplast oder ein Duroplast ist.

13. Zusammensetzung nach einem der Ansprüche 1 bis 12, wobei die Intumeszenzzusammensetzung eine Säurequelle, eine Hydroxylquelle und ein Schaummittel umfasst.

14. Zusammensetzung nach Anspruch 13, wobei die Säurequelle der Intumeszenzzusammensetzung ausgewählt wird aus der Liste bestehend aus phosphorsauren Salzen, Phosphorsäuren, schwefelsauren Salzen, Schwefelsäuren, borsauren Salzen, Borsäuren und einer Kombination daraus.

15. Zusammensetzung nach Anspruch 14, wobei die Säurequelle der Intumeszenzzusammensetzung ausgewählt wird aus der Liste bestehend aus Ammoniumsulfaten, Ammoniumboraten, Ammoniumphosphaten, Aminphosphaten, Amidphosphaten, phosphororganischen Aminen, Sulfatsalzen von nitrosubstituierten aromatischen Aminen, organischen Phosphorverbindungen und einer Kombination daraus.

16. Zusammensetzung nach einem der Ansprüche 13 bis 15, wobei die Hydroxylquelle der Intumeszenzzusammensetzung ausgewählt wird aus der Liste bestehend aus Pentaerythritol, Dipentaerythritol, Glukose, Arabinose, Maltose, Erythritol, Arabit, Inosit, Stärke, Dextrin, Sorbit, Resorcin, Phenolen, Pentaerythritol/ Polyurethanen, Glycerin, Methylolmelamin, Isanoöl, Leinöl und einer Kombination daraus.

17. Zusammensetzung nach einem der Ansprüche 13 bis 16, wobei das Schaummittel der Intumeszenzzusammensetzung ausgewählt wird aus der Liste bestehend aus Melamin, Guanidin, Glycin, Harnstoff, Azodicarbonamid, Benzol, Sulfonylhydrazin, Azobisbutyronitril-p-toluolsulfonyl-semicarbazid, Wachsen, Bicarbonaten und einer Kombination daraus.

18. Zusammensetzung nach einem der Ansprüche 1 bis 17, die weiterhin mindestens einen Zusatzstoff umfasst.

19. Zusammensetzung nach Anspruch 18, wobei der Zusatzstoff ausgewählt wird aus der Liste bestehend aus Koaleszensmitteln, Weichmachern, Dispergiermitteln, Netzmitteln, oberflächenaktiven Stoffen, Entschäumern oder rheologischen Zusatzstoffen.

20. Zusammensetzung nach einem der Ansprüche 1 bis 19, die weiterhin ein mechanisches Verstärkungsmittel mit einem Gewichtsprozentsatz von 0,3 bis 5 % umfasst.

21. Zusammensetzung nach Anspruch 20, wobei das mechanische Verstärkungsmittel Glasperlen in Form von Partikeln mit einem Durchmesser kleiner als 70 Mikrometer vorliegt.

22. Zusammensetzung nach Anspruch 20, wobei das mechanische Verstärkungsmittel Siliciumdioxid oder Aluminiumoxid mit einer Partikelgröße kleiner als 0,5 Mikrometer ist.

23. Zusammensetzung nach einem der Ansprüche 1 bis 22, die weiterhin expandierbaren Graphit niedriger Expansionstemperatur mit einer Partikelgröße von mindestens 50 Mikrometern und einem Gewichtsprozentsatz von weniger als 10 % umfasst.

24. Zusammensetzung nach Anspruch 23, wobei der expandierbare Graphit niedriger Expansionstemperatur mit einem Gewichtsprozentsatz von weniger als 4 % vorliegt.

25. Zusammensetzung nach einem der Ansprüche 1 bis 24, die weiterhin reflektierende Zusatzstoffe mit einem Prozentsatz von 1 bis 10 Gew.-% umfasst.

26. Zusammensetzung nach Anspruch 25, wobei die reflektierenden Zusatzstoffe mit einem Gewichtsprozentsatz von 1 bis 5 Gew.-% vorliegen.

27. Zusammensetzung nach einem der Ansprüche 25 oder 26, wobei die reflektierenden Zusatzstoffe Partikel mit einem Durchmesser kleiner als 70 Mikrometer sind.

28. Zusammensetzung nach einem der Ansprüche 25 bis 27, wobei die reflektierenden Zusatzstoffe Pigmente sind.

29. Zusammensetzung nach einem der Ansprüche 25 bis 27, wobei die reflektierenden Partikel aus Aluminium oder Aluminiumverbindungen bestehen.

30. Verfahren zur Herstellung der Zusammensetzung nach den Ansprüchen 1 bis 29, das mit Techniken der gleichmäßigen Dispergierung von Polymermatrizes bei Temperaturen unterhalb von 350 ºC durchgeführt wird und folgende Schritte umfasst:
a) Aufwärmen des festen polymeren Bindemittels in Anwesenheit eines Zusatzstoffes, der aus Weichmachern, Verträglichkeitsvermittlern und einer Kombination daraus ausgewählt wird,
b) Zugabe des TiO₂ und optional mindestens eines mechanischen Verstärkungsmittels zum Gemisch aus Schritt (a),
c) Zugabe des Aluminiumoxid-Trihydrats, einer Zinnverbindung und optional mindestens eines mechanischen Verstärkungsmittel und mindestens eines reflektierenden Zusatzstoffes zum Gemisch aus Schritt (b),
d) Zugabe einer Intumeszenzzusammensetzung zum Gemisch aus Schritt (c),
e) optionale Zugabe von expandierbarem Graphit niedriger Expansionstemperatur, mindestens einem mechanischen Verstärkungsmittel, mindestens einem reflektierenden Zusatzstoff oder einer Kombination daraus zum Gemisch aus Schritt (d).

31. Verfahren nach Anspruch 30, das bei Temperaturwerten von 50 bis 350 ºC durchgeführt wird.

32. Verfahren nach Anspruch 31, das bei Temperaturwerten von 50 bis 300 ºC durchgeführt wird.

33. Verfahren nach einem der Ansprüche 30 bis 32, wobei die Techniken der gleichmäßigen Vermischung ausgewählt werden aus der Liste bestehend aus Extrusion, Compoundierung, Mischung, Sonikation und Zentrifugation.

34. Verfahren zur Herstellung der Zusammensetzung nach den Ansprüchen 1 bis 29, das mit Techniken der gleichmäßigen Dispergierung bei Geschwindigkeiten von weniger als 30 ms⁻¹ durchgeführt wird und folgende Schritte umfasst:
a) Herstellung einer Vormischung umfassend Lösungsmittel, Hilfslösungsmittel, Koaleszensmittel, Weichmacher, Dispergiermittel, Netzmittel, oberflächenaktive Stoffe, Flexibilisierungsmittel und Entschäumer, wobei diese Vormischung einen pH-Wert im Bereich von 7,5 bis 8,5 aufweist,
b) Zugabe des TiO₂ und optional mindestens eines mechanischen Verstärkungsmittels und optional eines rheologischen Zusatzstoffes zur Vormischung aus Schritt (a),
c) Zugabe des Aluminiumoxid-Trihydrats, einer Zinnverbindung und optional mindestens eines mechanischen Verstärkungsmittel und mindestens eines reflektierenden Zusatzstoffes zum Gemisch aus Schritt (b),
d) Zugabe einer Intumeszenzzusammensetzung zum Gemisch aus Schritt (c),
e) optionale Zugabe von expandierbarem Graphit niedriger Expansionstemperatur, mindestens einem mechanischen Verstärkungsmittel, mindestens einem reflektierenden Zusatzstoff oder einer Kombination daraus zum Gemisch aus Schritt (d) und
f) Zugabe eines flüssigen polymeren Bindemittels zum Gemisch aus Schritt (e).

35. Verfahren nach Anspruch 34, wobei die Techniken der gleichmäßigen Dispergierung ausgewählt werden aus der Liste bestehend aus Mahlen, Rühren, Auflösung, Emulsion, Sonikation und Zentrifugation.

36. Verwendung der halogenfreien Zusammensetzung nach einem der Ansprüche 1 bis 29 als Intumeszenz-Brandschutzbeschichtung.

37. Verwendung nach Anspruch 36 als Intumeszenz-Brandschutzbeschichtung für Gegenstände.

38. Verwendung nach Anspruch 37, wobei die Gegenstände Bauteile aus Stahl, Verbundwerkstoffe, Holz oder verstärkte Kunststoffe sind.

39. Gegenstand, der mit der beschriebenen halogenfreien Zusammensetzung nach einem der Ansprüche 1 bis 29 beschichtet ist.

40. Verfahren zur Herstellung des beschichteten Gegenstands nach Anspruch 39, das einen Schritt der Beschichtung des Gegenstands durch Spritzen umfasst.

41. Gegenstand, der die beschriebene halogenfreie Zusammensetzung nach einem der Ansprüche 1 bis 29 eingebettet enthält.

## Revendications

1. Composition exempte d'halogène qui comprend les composants suivants
• un composé de l'étain dans un pourcentage en poids compris entre 0.1 et 1 % avec une taille de particules inférieure à 5 micromètres,
• un liant polymère dans un pourcentage en poids compris entre 5 et 50 %,
• une composition intumescente dans un pourcentage en poids compris entre 20 et 60%,
• du TiO₂ dans un pourcentage en poids compris entre 4 et 7%, et
• du trihydrate d'alumine dans un pourcentage en poids compris entre 2 et 5%.

2. Composition, selon la revendication 1, dans laquelle le composé de l'étain a un pourcentage en poids compris entre 0.2 et 0.5 %.

3. Composition, selon l'une quelconque des revendications 1 ou 2, dans laquelle le liant polymère a un pourcentage en poids compris entre 5 et 32 %.

4. Composition, selon l'une quelconque des revendications 1 à 3, dans laquelle la composition intumescente a un pourcentage en poids compris entre 30 et 50 %.

5. Composition, selon l'une quelconque des revendications 1 à 4, dans laquelle le trihydrate d'alumine a un pourcentage en poids compris entre 2.5 et 4 %.

6. Composition, selon l'une quelconque des revendications 1 à 5, dans laquelle le composé de l'étain est sélectionné parmi la liste comprenant du stannate de zinc, de l'hydroxystannate de zinc et de l'oxyde d'étain.

7. Composition, selon l'une quelconque des revendications 1 à 6, dans laquelle la taille des particules du composé de l'étain est comprise entre 10 et 500 nanomètres.

8. Composition, selon l'une quelconque des revendications 1 à 7, dans laquelle le composé de l'étain est ajouté sous forme de composé de l'étain recouvert de trihydroxyde d'aluminium.

9. Composition, selon l'une quelconque des revendications 1 à 8, dans laquelle le liant polymère est une résine.

10. Composition, selon la revendication 9, dans laquelle la résine est en forme de résines solides, résines liquides, résines hydrosolubles, de résines ou d'émulsions dispersables dans l'eau.

11. Composition, selon la revendication 9 ou 10, dans laquelle la résine est sélectionnée parmi la liste consistant en acétates de polyvinyle, acryliques, caoutchoucs, polyuréthanes, alkydes, silicones, urée-formaldéhyde, résines époxy, polyesters, nitrocellulose, esters de vinyle, résines acryliques de styrène, butadiène polyvinyle de styrène et de leurs mélanges, hybrides et combinaisons.

12. Composition, selon la revendication 9, dans laquelle la résine est une résine thermoplastique ou thermodurcissable.

13. Composition, selon l'une quelconque des revendications 1 à 12, dans laquelle la composition intumescente comprend une source d'acide, une source d'hydroxyle et un agent antimousse.

14. Composition, selon la revendication 13, dans laquelle la source d'acide de la composition intumescente est sélectionnée parmi la liste composée de sels phosphoriques, acides phosphoriques, sels sulfuriques, acides sulfuriques, sels boriques, acides boriques et d'une combinaison de ceux-ci.

15. Composition, selon la revendication 14, dans laquelle la source d'acide de la composition intumescente est sélectionnée parmi la liste composée de sulfates d'ammonium, borates d'ammonium, phosphates d'ammonium, phosphates d'amine, phosphates d'amide, amines organophosphorées, sels de sulfate d'amines aromatiques nitro substituées, composés organophosphorés et d'une combinaison de ceux-ci.

16. Composition, selon l'une quelconque des revendications 13 à 15, dans laquelle la source d'hydroxyle de la composition intumescente est sélectionnée parmi la liste composée de pentaérytrhitol, dipentaérythritol, glucose, arabinose, maltose, érythritol, arabitol, inositol, amidon, dextrine, sorbitol, résorcinol, phénoliques, polyuréthanes de pentaérythritol, glycérol, mélamine de méthylol, huile d'isano, huile de lin et d'une combinaison de ceux-ci.

17. Composition, selon l'une quelconque des revendications 13 à 16, dans laquelle l'agent antimousse de la composition intumescente est sélectionné dans la liste composée de mélamine, guanidine, glycine, urée, azodicarbonamide, benzène, sulfonyle, hydrazine, semicarbazide d'azobisbutyronitrile-p-toluène-sulfonyle, cires, bicarbonates et d'une combinaison de ceux-ci.

18. Composition, selon l'une quelconque des revendications 1 à 17, qui comprend en outre au moins un additif.

19. Composition, selon la revendication 18, dans laquelle l'additif est sélectionné dans la liste composée de coalescents, plastifiants, agents dispersants, agents mouillants, agents de surface, agents antimousse ou d'additifs rhéologiques.

20. Composition, selon l'une quelconque des revendications 1 à 19, qui comprend en outre un additif d'intensification mécanique dans un pourcentage en poids compris entre 0.3 et 5 %.

21. Composition, selon la revendication 20, dans laquelle l'additif d'intensification mécanique se compose de particules de billes de verre d'un diamètre inférieur à 70 micromètres.

22. Composition, selon la revendication 20, dans laquelle l'additif d'intensification mécanique est la silice ou l'alumine ayant une taille de particules inférieure à 0.5 micromètres.

23. Composition, selon l'une quelconque des revendications 1 à 22, qui comprend en outre du graphite expansé à faible température d'expansion avec une taille de particules d'au moins 50 micromètres dans un pourcentage en poids inférieur à 10%.

24. Composition, selon la revendication 23, dans laquelle le graphite expansé à faible température d'expansion a un pourcentage en poids inférieur à 4%.

25. Composition, selon l'une quelconque des revendications 1 à 24, qui comprend en outre des additifs réfléchissants dans un pourcentage en poids compris entre 1 et 10%.

26. Composition, selon la revendication 25, dans laquelle les additifs réfléchissants ont un pourcentage en poids compris entre 1 et 5%.

27. Composition selon l'une quelconque des revendications 25 ou 26, dans laquelle les additifs réfléchissants sont des particules ayant un diamètre inférieur à 70 micromètres.

28. Composition selon l'une quelconque des revendications 25 à 27, dans laquelle les additifs réfléchissants sont des pigments.

29. Composition, selon l'une quelconque des revendications 25 à 27, dans laquelle les particules réfléchissantes sont l'aluminium ou des composés de l'aluminium.

30. Un procédé pour l'obtention de la composition, selon les revendications 1 à 29, qui s'effectue au moyen de techniques de dispersion uniforme de matrices polymères à des températures au-dessous de 350 ºC et qui comprend les étapes suivantes :
a) chauffage du liant polymère solide en présence d'un additif sélectionné parmi des plastifiants, des agents de compatibilité et une combinaison de ceux-ci,
b) addition de TiO₂ et optionnellement d'au moins un additif d'intensification mécanique au mélange de la phase (a),
c) addition de trihydrate d'alumine, d'un composé de l'étain, et optionnellement d'au moins un additif d'intensification mécanique et d'au moins un additif réfléchissant au mélange de la phase (b),
d) addition d'une composition intumescente au mélange de la phase (c),
e) addition optionnelle de graphite expansé à faible température d'expansion, d'au moins un additif d'intensification mécanique, d'au moins un additif réfléchissant ou d'une quelconque combinaison de ceux-ci au mélange de la phase (d).

31. Procédé, selon la revendication 30, qui s'effectue à des valeurs de température comprises entre 50 et 350 ºC.

32. Procédé, selon la revendication 31, qui s'effectue à des valeurs de température comprises entre 50 et 300 ºC.

33. Procédé, selon l'une quelconque des revendications 30 à 32, dans lequel techniques de mélange uniforme sont sélectionnées dans la liste consistant en des techniques d'extrusion, de compoundage, de mélange, de sonification et de centrifugation.

34. Procédé pour l'obtention de la composition, selon les revendications 1 à 29, qui s'effectue au moyen de techniques de dispersion uniforme à des vitesses inférieures à 30 ms⁻¹ et qui comprend les étapes suivantes :
a) préparation d'un prémélange comprenant des solvants, des cosolvants, des coalescents, des plastifiants, des agents dispersants, des agents mouillants, des agents de surface, des agents d'assouplissement et des agents antimousse, ledit prémélange ayant des valeurs de pH comprises entre 7.5 et 8.5,
b) addition de TiO₂ et optionnellement d'au moins un additif d'intensification mécanique et optionnellement d'au moins un additif rhéologique au prémélange de la phase (a),
c) addition de trihydrate d'alumine, d'un composé de l'étain et optionnellement d'au moins un additif d'intensification mécanique et d'au moins un additif réfléchissant au mélange de la phase (b),
d) addition d'une composition intumescente au mélange de la phase (c),
e) addition optionnelle de graphite expansé à faible température d'expansion, d'au moins un additif d'intensification mécanique, d'au moins un additif réfléchissant ou d'une combinaison quelconque de ceux-ci au mélange de la phase (d), et
f) addition d'un liant polymère liquide au mélange de la phase (e).

35. Procédé, selon la revendication 34, dans lequel les techniques de dispersion uniforme sont sélectionnées parmi la liste consistant en une technique de broyage, d'agitation, de dissolution, d'émulsion, de sonification et de centrifugation.

36. Utilisation de la composition exempte d'halogène selon l'une quelconque des revendications 1 à 29 sous forme d'intumescent de protection contre un incendie.

37. Utilisation selon la revendication 36 sous forme de revêtement intumescent de protection contre un incendie d'articles.

38. Utilisation selon la revendication 37, dans laquelle les objets sont des composants structurels en acier, des composites, du bois ou des plastiques renforcés.

39. Article revêtu de la composition exempte d'halogène décrite selon l'une quelconque des revendications 1 à 29.

40. Procédé pour l'obtention de l'article revêtu selon la revendication 39, comprenant une étape de revêtement de l'article par pulvérisation.

41. Article ayant intégré la composition exempte d'halogène décrite selon l'une quelconque des revendications 1 à 29.
